# EUROPEAN PATENT SPECIFICATION

(11) **EP 1 868 820 B1**
(45) Date of publication and mention of the grant of the patent: **11.09.2013**
(21) Application number: 06740729.6
(22) Date of filing: 07.04.2006
(51) Int. Cl.: B42D 15/00, B44F 1/08, G09B 11/04, G09B 17/02

(54) **WRITING PAPER**
SCHREIBPAPIER
PAPIER D'ÉCRITURE

(30) Priority: 13.04.2005 SE 0500825
(43) Date of publication of application: 26.12.2007
(73) Proprietor: Whitelines AB, 114 39 Stockholm (SE)
(72) Inventor: HANSSON, Olof, S-191 45 Sollentuna (SE)
(74) Representative: Herbjørnsen, Rut
(86) International application number: PCT/US2006/013061
(87) International publication number: WO 2006/113174

(56) References cited:
- BE-A2- 891 482
- CN-A- 1 069 228
- FR-A1- 2 416 800
- US-A- 5 692 071
- US-A- 6 039 434

## Description

The invention relates to a writing paper that includes reading or writing lines, of the kind that is described in the ingress of claim 1.

In particular, when handwritten notes are to be written on a paper sheet, it is desirable that the sheet is provided with parallel horizontal lines and possibly also vertical parallel lines to form a grid pattern such as a pattern with squares. Even when reading, it is desirable that the sheet has such lines.

When copying writings and pictures onto a paper it is often less desirable that the lines are visible on the copy. On the other hand, it is desirable that the lines clearly contrast the background of the lines that are formed on the sheet surface so that the lines provide an effective support for the writer during reading and writing. On conventionally lined substantially white paper with dark lines the lines often copy better onto the copies than the notes when using conventional office copiers and scanners.

If one tries to make the lines lightly colored, they do not fill their intended basic function i.e. to provide a support for keeping the writing on straight rows. To both provide easily visible lines and also to prevent the copying of these lines onto the copies during copying of the handwritten sheet, it is known to provide white paper sheets with relatively strong contrasting lines of a color (blue) that older conventional copiers have difficulties in recognizing. This has only a limited use since copiers and scanners nowadays also recognize colors including blue.

CN 1069 228 discloses a solution having colored lines to disappear. These lines can be yellow, blue or green and their intended function is to disappear at copying.

Another prior art solution is presented in FR 2 416 800 that discloses a sheet for musical use. The sheet consists of a surface with fine vertical lines evenly distributed on said surface and thin horizontal lines whose spacing corresponds to that of staff lines,: The vertical and horizontal auxiliary lines are likely to disappear by a process of photocopying or other, to leave only the lines of litters with musical notes written on them.

One object of the invention is therefor to provide a paper with lines that provide good reading ergonomics. The object is also to provide lines that are clear but still light so that they not easily can be transferred over to copies when using conventional copiers/scanners.

The object is accomplished by the invention.

The invention is defined in the appended claim 1.

Embodiments of the invention are described in the appended dependent patent claims.

The invention basically means that the lines of the paper sheet are formed by "un-colored" paper-surface portions while the rest of the paper surface has an evenly extending and very light "coloring." The lines represent an insignificant part of the surface area of the paper sheet. The coloring is sufficiently light so that it is not recognized by the sensor devices of conventional copiers or scanners due to the contrast relative to the lines or relative to a reference. Because the light coloring extend over a relatively large area on the paper sheet, it can easily be recognized by the human eye as a peaceful and relaxing background while the un-colored paper areas are recognized as distinctly contrasting despite the insignificant color difference between the lines and the background i.e. the colored and the uncolored surfaces. Although the color difference between the lines is insignificant it is easily recognized by the human eye even when the lines have an insignificant color difference (uncolored or white), while a copier with a normally set sensitivity has difficulties in recognizing that the background surface has a contrasting color relative to the lines. The sensitivity limits of copiers/scanners are normally set to a value so that dirt etc. is not shown on the copy.

### Example of embodiment

A white paper sheet in A4 format for typing was provided with square-shaped filled boxed with an edge length of 5 mm. The boxes were aligned in orthogonal rows and columns with a relative distance of 1 mm. The distance between the boxes thus defined a pattern of equidistant uncolored lines that were perpendicular to one another with a width of 1 mm. The difference between the light lines and the darker portions of the sheet, i.e. delta E, in Lab-space, is in the interval 1-18, preferably in the interval 2-10. In the lower part of the interval a conventional office copier and a conventional office scanner did not recognize any color or blackness of the boxes while the human eye could clearly recognize the lines.

The paper sheet of the present invention has substantially white lines on a paper surface wherein the remainder has a light color tone or gray tone (has a low color difference), the white lines are, in all places, recognized as more clear compared to the corresponding toned lines on the substantially white background. A drawn black line gets a clear contrasting effect on the paper of the present invention even though it is drawn on a substantially white line or on a toned background since the lines of the paper are white and the background tone of the paper have a very low color difference. In contrast hereto a drawn black line on a white paper with a toned line pattern is more difficult to recognize since the toned line on a white paper get a lower difference compared to the drawn black line compared to the toned background of the paper pattern of the present invention even when the color difference between the white paper surface and the toned part is the same in both cases.

According to the invention it seems important that the colored area is much larger than the uncolored area. For example, the uncolored lines should account for at the most 20% of the colored area.

Compared to conventional paper with dark lines on a white background the invention provides, for the human eye, a clearer contrast and more distinguished difference for a line with a substantial color difference that is drawn on the paper even if the drawn line is narrow. When copying of the paper of the invention with writings with colored lines, the writing is clearly copied while the toned background is not recognized by a conventional office copier/scanner.

Even black and white shall be seen as colors. "Paper" means a thin sheet material that is intended to be provided with a writing. A "paper sheet" does not have to include cellulose but be based on any material with which a thin sheet product can be made that is writable.

## Claims

1. A writing paper with lines, including a paper area with one or many reading or writing lines wherein the paper has a main area with a first degree of color difference and one or many lines with a second degree of color difference, that visibly contrast the degree of color difference of the main area, **characterized in that** the lines are substantially white and the main area having a higher color tone or graytone and the degree of color difference of the main area compared to the lines, defined as delta E in (CIE) -Lab space, is in the interval 1-18.

2. The writing paper according to claim 1 characterized therein that the degree of color difference between the lines and the main area, defined as delta E in (CIE) -Lab space, is in the interval 2-10.

3. The writing paper according to claim 1 or 2, wherein the main area has an evenly extending and very light coloring.

## Patentansprüche

1. Schreibpapier mit Linien, das eine Papierfläche mit einer oder vielen Lese- oder Schreiblinien enthält, wobei das Papier eine Hauptfläche mit einem ersten Grad an Farbunterschied und eine oder viele Linien mit einem zweiten Grad an Farbunterschied aufweist, die sichtbar den Grad an Farbunterschied der Hauptfläche kontrastieren, **dadurch gekennzeichnet, dass** die Linien im Wesentlichen weiß sind und die Hauptfläche einen höheren Farbton oder Grauton aufweist und der Grad an Farbunterschied der Hauptfläche im Vergleich zu den Linien, definiert als Delta E im (CIE)-Lab-Raum, im Intervall von 1 bis 18 liegt.

2. Schreibpapier gemäß Anspruch 1, **dadurch gekennzeichnet, dass** der Grad an Farbunterschied zwischen den Linien und der Hauptfläche, definiert als Delta E im (CIE)-Lab-Raum, im Intervall von 2 bis 10 liegt.

3. Schreibpapier nach Anspruch 1 oder 2, wobei die Hauptfläche eine gleichmäßig laufende und sehr helle Färbung aufweist.

## Revendications

1. Un papier d'écriture comportant des lignes, incluant une zone de papier comportant une ou plusieurs lignes de lecture ou d'écriture où le papier présente une zone principale avec un premier degré de différence de couleur et une ou plusieurs lignes avec un deuxième degré de différence de couleur, offrant un contraste visible avec le degré de différence de couleur de la zone principale, **caractérisé par le fait que** les lignes sont substantiellement blanches, que la zone principale comporte une tonalité de couleur ou de gris plus élevée et que le degré de différence de couleur de la zone principale par rapport aux lignes, définie comme delta E dans l'espace CIELab, se situe dans l'intervalle de 1 à 18.

2. Le papier d'écriture, conformément à la revendication 1, **caractérisé par le fait que** le degré de différence de couleur entre les lignes et la zone principale, définie comme delta E dans l'espace CIELab, se situe dans l'intervalle de 2 à 10.

3. Le papier d'écriture, conformément à la revendication 1 ou 2, où la zone principale présente une coloration très légère et de répartition uniforme.
